Europäisches Patentamt

European Patent Office

Office européen des brevets

(11) Publication number: 0 372 083 A1

# EUROPEAN PATENT APPLICATION
## published in accordance with Art. 158(3) EPC

(21) Application number: 89903207.2

(51) Int. Cl.5: B01D 33/06

(22) Date of filing: 15.03.89

(86) International application number:
PCT/JP89/00280

(87) International publication number:
WO 89/11902 (14.12.89 89/29)

(30) Priority: 03.06.88 JP 135696/88
03.06.88 JP 135697/88
03.06.88 JP 135698/88
03.06.88 JP 135699/88
03.06.88 JP 135700/88
03.06.88 JP 135701/88

(43) Date of publication of application:
13.06.90 Bulletin 90/24

(84) Designated Contracting States:
CH DE FR GB IT LI NL SE

(71) Applicant: FUJI FILTER KOGYO KABUSHIKI
KAISHA
Shinmuromachi-Build. 4, Nihonbashi
Muromachi 2-chome
Chuo-ku, Tokyo 103(JP)

(72) Inventor: TAKAHASHI, Yuichi
39, Imaizumishinmachi
Utsunomiya-shi Tochigi 321(JP)
Inventor: AZUMA, Katsuji
62-3, Chofugaoka 3-chome
Chofu-shi Tokyo 182(JP)

(74) Representative: Whalley, Kevin et al
MARKS & CLERK 57/60 Lincoln's Inn Fields
London WC2A 3LS(GB)

(54) SLURRY FILTERING APPARATUS.

(57) In a slurry filtering apparatus having valves and valve seats of abrasion-resistant metal, a pump pressurizes and ejects a slurry containing hard particles at a high concentration. The flow of slurry is forced upon a filter surface in a direction oblique to it. Since the ejection of slurry causes cavitation and abrupt changes in velocity in the flow, shearing forces are created to scatter larger particles. This prevents filter-cake deposition while permitting parallel-flow filtration.

FIG. 1

# SLURRY FILTER APPARATUS

(Technical Field)

This invention relates to a strainer or a filter apparatus adapted to various kinds of slurry such as emulsions containing fine particles of pigment and paint, raw materials for fine ceramics, magnetic materials, finely ground food materials and food additives, ship fuels, and mud. Hereinafter will be explained in detail some of the fields to which this invention applies.

The base film of a magnetic tape used commonly in video tape recorders contains particles of diameters less than 3 or 4 microns which are provided in order to make the magnetic tape slippery. It is preferable to make the tape as thin as possible, therefore if the diameter of the lubricating particles contained in the coating on the magnetic tape is larger than a predetermined diameter, the tape is considered to be defective. In accordance with the filter apparatus of the present invention, it is possible to provide lubricating particles of uniform diameter which can be used to manufacture defect free magnetic tape.

Conventionally, in the thread manufacturing field, thread or yarn is dyed by blending pigment particles directly into the thread. If the pigment particles to be mixed into the thread are larger than a predetermined diameter, gnarls are formed in the thread and as a result faults occur in the weaving operation of the defective thread by a weaver machine. It is therefore important that the particle diameter of the pigment blended with the thread is uniform. Using the filter apparatus according to the present invention the diameters of pigment particles can be kept consistent so that colored thread free of defects can be produced.

In the field of fine ceramics, if any coarse particles are contained in the raw material or if foreign particles are absorbed from the environment into the raw material during the manufacture of fine ceramics, they result in defects in the finished products after the baking operation. It is essential therefore to remove all coarse or irregular particles and foreign particles from the raw material of fine caramics. In accordance with the filter apparatus of the present invention, any undesired particles such as coarse or foreign particles can be eliminated from the raw material and, thanks to the purity of the raw material, fine ceramics free of defects can be produced.

Thus, the filter apparatus of the present invention is useful for filtering undesired particles from various types of slurry so as to obtain slurry containing only particles which are less than a predetermined diameter.

Another favorable aspect of the filter apparatus, according to the invention is its capacity to disperse or distribute particles in a slurry. The dispersive function makes the invention particularly useful in the refining process for fuel oil, in addition to the various industrial fields mentioned above. For example, C-class heavy oil used commonly as ship fuel oil contains a large percentage of sludge residue. The sludge residue contains various substances such as catalysts and high molecular substances. Therefore before C-class heavy oil is used as a fuel for a diesel engine the useless elements of the sludge must be removed. The high molecular substances contained in the sludge can be used as a fuel if the particles of the substance are well distributed. The high molecular substances, however, tend to clog filter elements making it difficult to strain sludge to obtain the high molecular substances by means of conventional filter systems. In accordance with the filter apparatus of the present invention, dispersion and filtering operations are simultaneously carried out making the filtering operation extremely efficient.

(Background Art)

A filter apparatus manufactured by the applicants of the present invention under the name Fujimicro Sonic Filter carries out a continuous filtering operation during which material caked onto the surface of the filter element is continuously removed. In this filter apparatus, there are an exterior chamber and an interior chamber which are separated from each other by cylindrical filter. The exterior chamber has an inlet and the interior chamber has an outlet. Layers of material caked onto the filter element of the filter apparatus are continuously broken up with ultrasonic waves during the filtering operation.

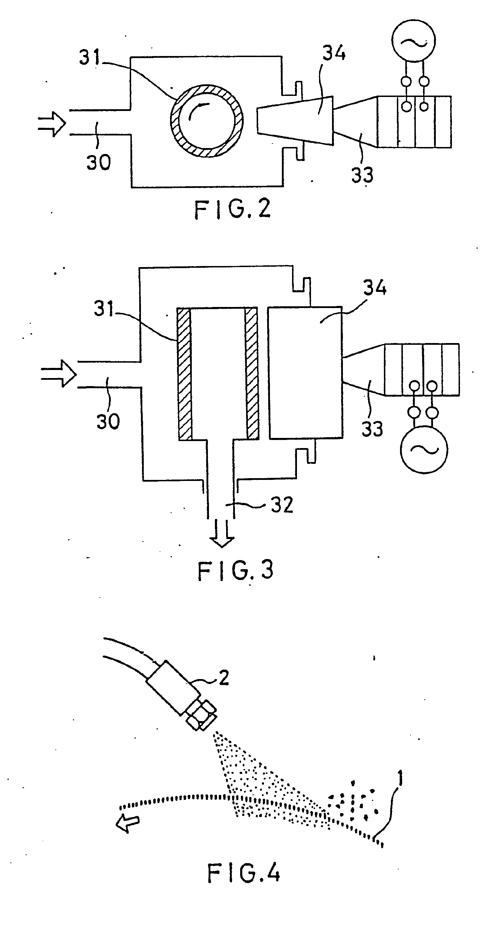

Figs. 2 and 3 give a side elevation cross sectional view and a cross sectional plan view of the above prior art filter apparatus in which cake layers are continuously broken up by means of ultrasonic waves. As shown in Fig 3, slurry is introduced through an inlet 30 and discharged from an outlet 32 after it is filtered through a filter 31. During the filtering operation, the coarse particles contained in the slurry form a layer on the surface of the filter element. Ultrasonic waves are directed onto the layer of material on the filter from a horn 34 connected to an ultrasonic wave generator 33, whereby coarse particles are dispersed, thus removing the caked layer. Because the cylindrical filter continuously rotates, the whole surface of the filter is cleaned by ultrasonic waves in successive portions. In order for the filter apparatus to operate properly, it is necessary that the particles are dispersed by the ultrasonic waves at a rate that is equal to, or better which exceeds, the rate at which the particles accumulate on the filter surface.

The dispersing and filtering capacity of the apparatus is determined by various factors relating to the amplitude of ultasonic waves, the shape of the horn, the distance between the front end of the horn and the filter element, the pressure of liquid to be treated, and the rotation speed of the filter. The cohering particle volume is determined by the particle density of the liquid, particle diameter, and mesh size of the filter. Although the above type of fiter apparatus using ultrasonic waves has considerable filter capacity, the conventional filter apparatus is still sometimes insufficient to filter slurry having high particle density.

The general purpose of the present invention is to provide a high efficiency filter apparatus capable of carrying out a continuous filtering operation for slurries containing hard fine particles and/or having high particle density.

(Disclosure of the Invention)

The filter apparatus of the present invention has a filter portion provided with an exterior chamber having an inlet and an outlet for slurry, each connected to a slurry tank containing the slurry to be treated, and an interior chamber having an outlet for the treated filtrate. The chambers are separated by a filter. The slurry is injected under high pressure into the exterior chamber through the slurry inlet. The flow of slurry is directed so as to strike the filter element surface at an angle. Cavitation generated in the high speed slurry flow and the abrupt speed change of the slurry flow generate shearing force which effectively disperses coarse particles contained in slurry within the flow. Meanwhile the injected slurry flows along the surface of the filter element. Because the slurry is injected at an angle so as to cause a substantial portion thereof to flow along or parallel with the surface of the filter, the caked layer is prevented from forming on the surface. Thus the flow ejected from the inlet strikes the filter surface at an angle and dislodges coarse particles sticking to the filter element. As described above, in accordance with the present invention, liquid to be treated is filtered in a manner wherein the parallel flow continuously dislodges any particles stuck in the filter mesh. The portion of the slurry which does not pass through the filter is discharged through the outlet provided in the exterior chamber and thereafter is conveyed within a slurry flow circulating within the chamber and is eventually returned to the slurry tank.

Alternatively, the slurry flow ejected from the slurry inlet may be once deflected by a hard deflector board so as to strike the surface of the filter.

The filter apparatus of the present invention further comprises a pump mechanism for pumping slurry of high density or containing hard particles under pressure. Valves and valve seats of the pump mechanism are composed of wear-resisting metal. Of the plural packings placed on the wall of a cylinder of the pump, the packings placed near the cylinder side are manufactured of wear-resisting resilient resin material.

(Brief Description of the Drawings)

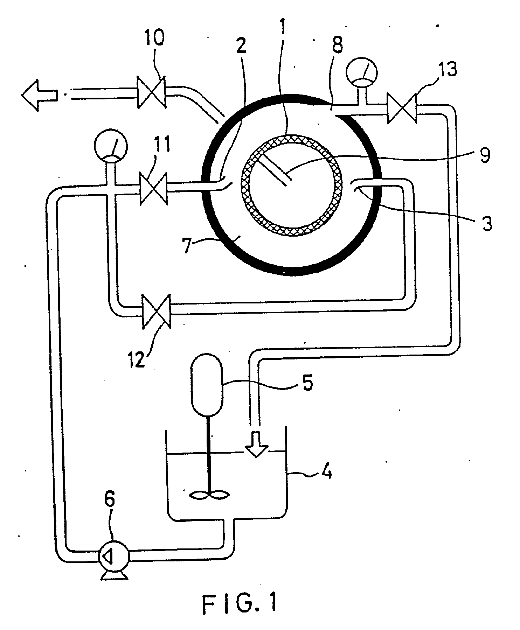

Fig. 1 is a systematic diagram for explaining an operation of a filter apparatus according to the present invention; Figs. 2 and 3 are schematic depictions of a prior art filter apparatus using ultrasonic waves; Fig. 4 is an schematic view of a nozzle dislodging particles from a clogged filter element due to the slurry flow in accordance with the filter apparatus of the present invention; Fig. 5 is a perspective view of an embodiment of the filter apparatus according to the present invention; Fig. 6 is a perspective view of another embodiment of the filter apparatus according to the present invention; Figs. 7 to 9 are cross sectional views of the filter mechanism of three embodiments of the present invention; Fig. 10 is a longitudinal cross-sectional view of the filter mechanism of the present Generally, it is necessary to forcibly send the slurry under at least 10 kgf/cm$^2$ of pressure.

The slurry is injected at angle into a filter exterior chamber 7 (hereinafter will be referred to as a filtering chamber) defined within the filter apparatus, through nozzles 2 and 3, each of which is provided on the front end of the inlet communicating with the filter apparatus.

The slurry thus injected forms a vortical flow within the filtering chamber 7. A portion of the slurry flows along the filter face substantially parallel thereto and some of the slurry passes through the filter. The portion passing through the filter passes into an interior chamber of the filter and is discharged through an outlet 9. The unfiltered portion of the slurry is discharged through a recirculation outlet 8 to be returned to the slurry tank 4.

Pressure differences generated in the above process, between the interior and the exterior chambers of the filter determine the filtering speed. This pressure difference is controlled by manual operation of control valves 10 ∿ 13. It is of course possible to replace these valves 10 ∿ 13 with automatic valves controlled by a microcomputer.

Because the surface of the filter 1 is always exposed to flowing slurry, it is difficult for a caked layer to form on the filter face as tends to occur the case of the conventional filter apparatus. Consequently, it is possible to operate the slurry filter apparatus according to the present invention for a long period without any interruption. When the mesh of the filter 1 becomes clogged, the pressure difference between the interior and the exterior of the filter 1 can reduced to zero by closing of the valve 10, so that any material clogging the filter mesh is carried away by means of a backflow of slurry flowing through the mesh.

Due to the high-speed flow of slurry injected from the nozzle and the sudden change in flowing speed of slurry occurring at the moment of injection, shearing forces are generated in the slurry which function to distribute the particles. Cavitation is also generated in the high-speed flow of slurry which also serves to accelerate the distribution of particles in the slurry, in addition to the shearing force mentioned above. Thus, turbulence in the high-speed flow of slurry ejected from the nozzles provided on the front end of the inlet serves to distribute the particles in the slurry.

According to the filter apparatus of the present invention, while the slurry circulates in the filter chamber, the recirculation outlet 8 is formed so as to direct the flow of slurry tangentially to the filter chamber. This results in a vorticular flow which speeds up the circulation of the slurry and the entrained particles. As a result, the slurry is well dispersed.

Although two nozzles are depicted in the drawing, it will be readily appreciated by those skilled in the art that other numbers of nozzles are possible and that the number of nozzles will be selected in accordance with the size of the filter apparatus, the viscosity of slurry, and so on.

As shown in Fig. 4, when the slurry injected from the nozzle 2 provided on the front end of the inlet strikes the face of the filter 1, fine particles clogging in the filter element are driven out of the element. Because the filter 1 is rotated, successive clogged filter portions of its periphery are exposed to the high speed flow of slurry from the nozzle so that entire periphery of the filter is effectively cleaned with each revolution. The cleaning effect is improved when the slurry flow strikes the filter face at a sharp angle. However, this tends to damage the filter element. In practice, it has been found that the slurry is preferably injected at an angle that is not more than 30 degrees inside of a tangent from the filter surface. Experiment has shown about a 15 degree angle with respect to the tangent to be optimum. The appropriate injection angle is set by adjusting the nozzle. It is preferable that the filter is rotated as the high-speed slurry flow is sprayed onto the filter, since in this way the whole surface of the filter is cleaned, and the life time of the filter element is extended.

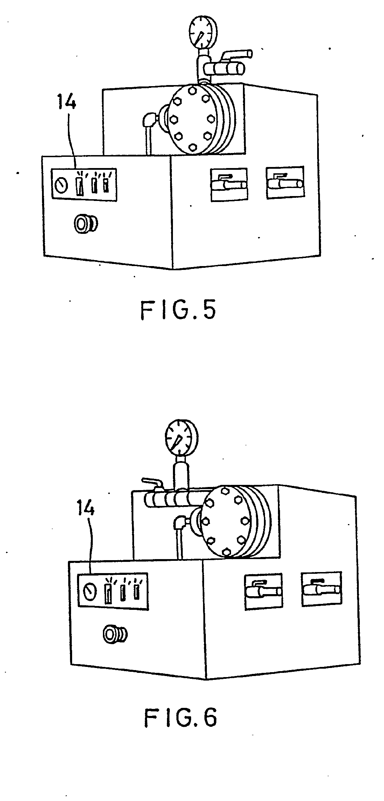

Fig. 5 is a perspective view showing the filter apparatus according to the present invention. The filter apparatus shown has a recirculation outlet defined at the upper portion of the filter chamber. The slurry is injected from the left side of the filter chamber. The rotation rates of the pump and the filter are controlled through a control panel 14 situated at the front face of the filter apparatus.

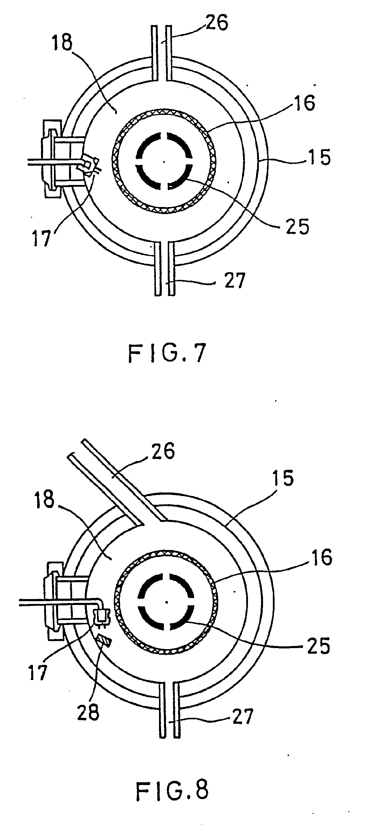

Fig. 7 is a transverse sectional view of a filtering mechanism provided with a housing 15. A cylindrical filter 16 made of stainless steel (SUS 304) is rotatably received in the housing 15. The nozzle 17 is arranged so as to inject the slurry at an angle about 15 degrees inward from the tangential direction of the filter surface. The filter chamber 18 has a recirculation outlet 26 at its upper side and a drain port 27 at its lower portion. During the filter operation, the drain port 27 is closed. Slurry is filtered through the filter 16 and discharged out of the filter through the outlet 25. Remaining unfiltered slurry returns to the slurry tank through the recirculation outlet 26.

According to another embodiment of the filter apparatus shown in Fig. 8, the flow of slurry ejected from the nozzle 17 is not aimed directly toward to the filter face. Instead, in the filter apparatus shown in Fig. 8, the nozzle 17 is directed outward from the tangential direction of the filter 16. A deflector 28 is placed on a direction of injection of the nozzle 17 and redirects the flow of slurry against the filter. When the slurry strikes the deflector 28, particles in the flowing slurry collide violently with the hard deflector 28 and they are thoroughly distributed. The deflector 28 is preferably made of a hard antiabrasive material such as tungsten carbide, alumina. In this embodiment of the present filter apparatus, the recirculation outlet is arranged at a tangent to the direction of the vortical flow of the slurry so that the slurry is easily inducted into the recirculation port.

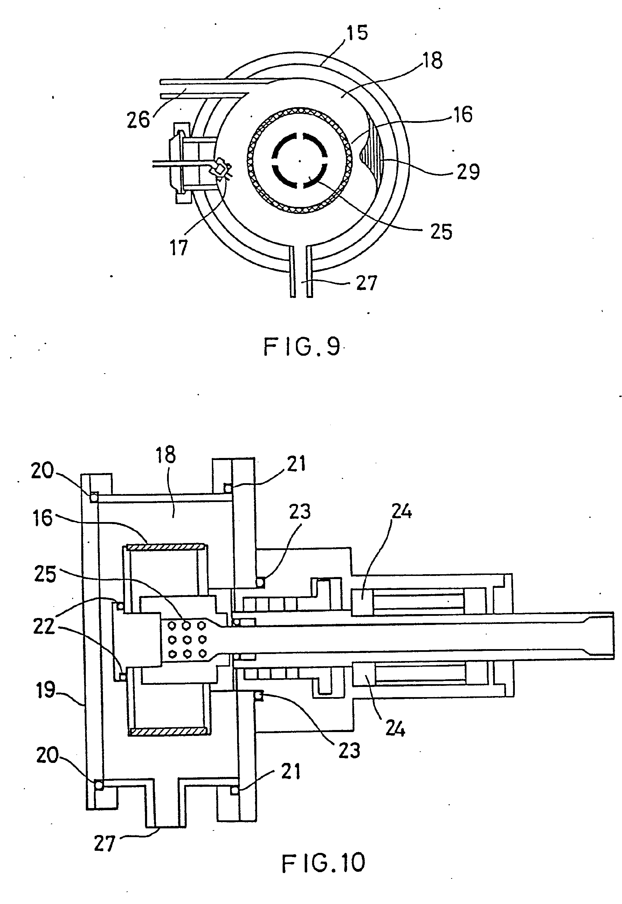

In still another embodiment of the filter apparatus of the present invention as shown in Fig. 9, the vortical flow of slurry generated in the filter chamber is utilized for solving the problem of filter clogging. As shown in Fig. 9, a flow restrictor member or a negative pressure generating member 29 is provided in the filter chamber in order to restrict the flow of slurry at the narrowed portion, so that negative pressure is generated in the filter chamber owing to the hydrodynamic effect. This negative pressure is effective in drawing clogging particles out of the mesh.

As will be appreciated from the longitudinal cross sectional view of the apparatus given in Fig. 10, the filter chamber 18 is enclosed within a housing having a lid 19. A number of O-rings 20∿23 are provided for sealing the chamber 18. The support structure of the filter element is rotatably mounted to the housing by means of bearings 24. The liquid passed through the filter 16 flows out of the inner chamber from the outlet 25.

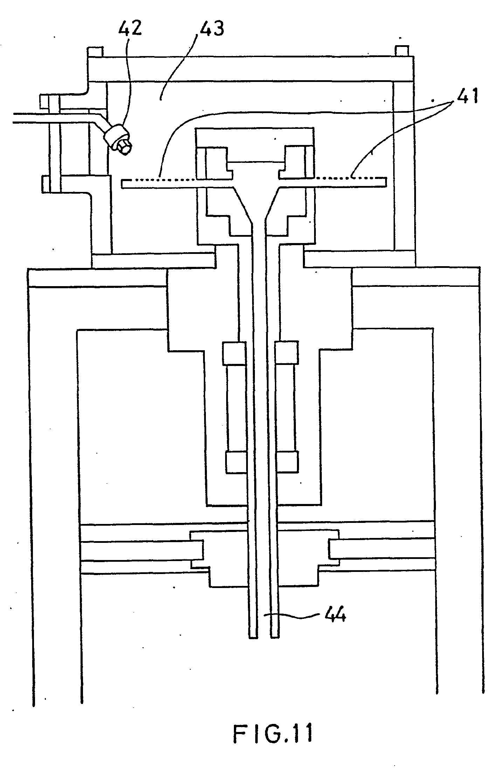

It will be appreciated that embodiments of the filter apparatus of the present invention may comprise filters of various shapes other than the cylindrical filter configuration employed in the embodiment described above. In Fig. 11, an embodiment of the filter apparatus is shown in which a disc shaped filter is used. The disc-shaped filter 41 is arranged so as to define a horizontal plane and is cleaned by the flow of slurry ejected from a slantly disposed nozzle 42 of the slurry outlet into the interior of the filter chamber 43. As in the embodiment having the cylindrical filter, a portion of the slurry flows parallel to the face of the disc-shaped filter during the filtering operation of slurry through the filter element. Filtered liquid is drained through the outlet 44 after passing through the disc-shaped filter. The slurry outlet is oriented in the direction of the flow of slurry filtrate so as to induct slurry smoothly.

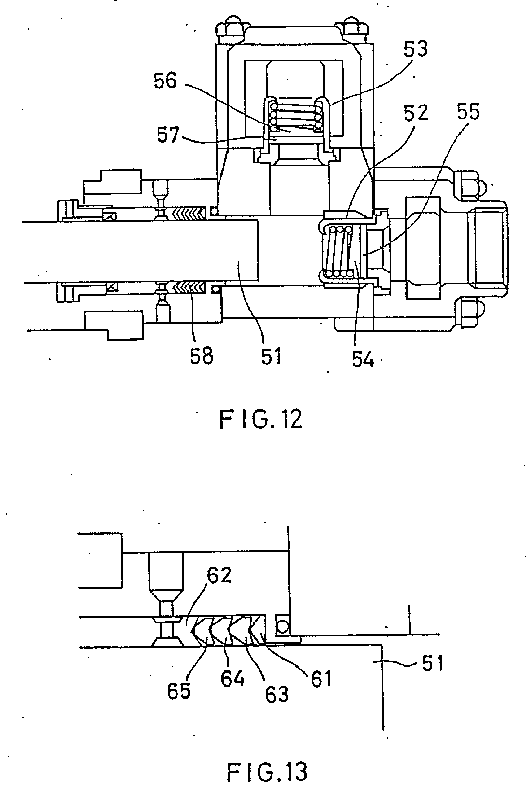

Fig. 12 is a sectional view of a plunger pump adapted for use in the filter apparatus of the present invention. In operation, a plunger 51 made of a ceramic material moves to the right and left in the figure. By the action of the plunger, slurry is drawn in through an intake valve 52 and discharged through a discharge valve 53. Because the slurry contains fine hard particles, valve discs 54 and 56, and valve seats 55 and 57 respectively are preferably made of ultra-hard alloy metal in order to prevent them from wearing out. According to still another embodiment of the filter apparatus, the valve discs and valve seats are made of stainless steel and coverings of ultra-hard metal alloy are brazed onto the portions most subject to wear.

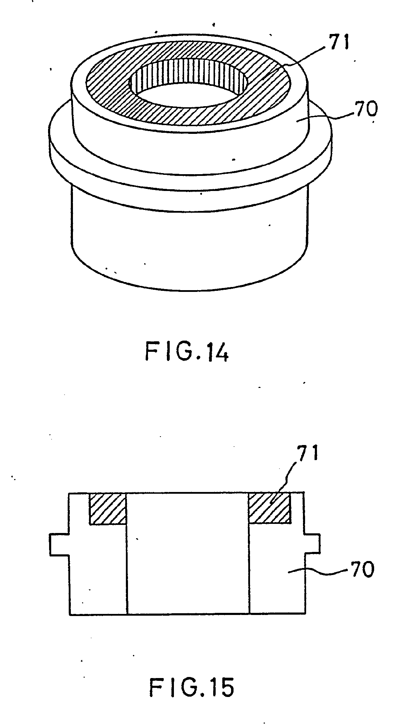

Figs. 14 and 15 show another example of a valve seat. The valve seat 70 is made of stainless steel. And, a member 71 made of relatively fragile material such as alumina or ceramic is attached to the interior periphery by shrink fitting. The valves are preferably made of a composite of stainless stell and the relatively fragile material such as alumina and ceramics. The parts made of such fragile material are attached to the metal by shrink process.

Fig. 13 is an enlarged view of the cylinder portion of the pump shown in Fig. 12. Three V-shaped cross section packings 63, 64 and 65 are installed between a male adapter 61 and a female adapter 62. These packings are ordinarily made of NBR. In one embodiment, as for the V-shaped cross section packings 63, 64 and 65, for example, the packing 63 is made of urethane resin and the other packings 64 and 65 are made of NBR. The V-shaped urethane packing deforms easily under the pressure applied thereon by the slurry and prevents the slurry from passing around the sides of the plunger. It will be noted that urethane resin has considerable wear resistant property, so that the urethane packing can enjoy a long life.

It is preferable to place a few V-shaped cross section packings made of wear-resistant and resilient material near the cylinder chamber of the filter apparatus and that the remaining packings made of ordinary material. As a result, an effective seal is obtained through collective action of the packings.

Claims:

1. A slurry filter apparatus in a structure consisting of a first chamber having a slurry inlet and a recirculation outlet leading to an outside portion of said first chamber so as to direct the flow direction of slurry, a second chamber having a filtrate outlet, and a filter separating said first and second chambers, comprising: means for feeding slurry to said slurry inlet from a slurry tank under pressure; means for ejecting the flow of slurry from said slurry inlet so as to strike a face of said filter at an angle; and means for recycling unfiltered slurry draw through said recirculation outlet to said slurry tank.

2. A slurry filter apparatus according to claim 1, wherein said filter is formed as a rotatable cylinder.

3. A slurry filter apparatus according to claim 1, wherein said filter is formed as a rotatable disc.

4. A slurry filter apparatus according to claims 1 to 3, wherein the axis of said slurry outlet is not more than 30 degrees inward from a tangent of the face of the filter.

5. A slurry filter apparatus according to one of claims 1 to 3, wherein it further comprises means for striking the flow of slurry ejected from said slurry inlet against a deflector toward the face of the filter.

6. A slurry filter apparatus according to one of claims 1 to 3, wherein it further comprises flow restricting means for reducing a sectional area of a portion of the flow of slurry defined in said first chamber provided with said slurry inlet.

7. . A slurry filter apparatus according to one of claims 1 to 3, wherein it further comprises a plunger pump for pumping the slurry to said slurry inlet under the pressure, said plunger pump having a valve and a valve seat, said valve and said valve seat being made of wear-resisting material, a group of packings made of wear-resisting resilient resisting material and placed at the cylinder chamber side, and another group of packings, said groups of packings being installed on the wall of said cylinder.

8. A slurry filter apparatus according to claim 7, wherein said wear-resisting resilient resin includes urethane resin.

9. A slurry filter apparatus according to claim 7, wherein said valve and said valve seat are formed as a composite by shrink fitting of wear-resisting material.

FIG. 1

FIG.2

FIG.3

FIG.4

FIG.5

FIG.6

FIG.7

FIG.8

FIG.9

FIG.10

FIG.11

FIG.12

FIG.13

FIG.14

FIG.15

# INTERNATIONAL SEARCH REPORT

International Application No **PCT/JP89/00280**

## I. CLASSIFICATION OF SUBJECT MATTER (if several classification symbols apply, indicate all)

According to International Patent Classification (IPC) or to both National Classification and IPC

Int. Cl$^4$  B01D33/06

## II. FIELDS SEARCHED

| Minimum Documentation Searched | |
|---|---|
| Classification System | Classification Symbols |
| IPC | B01D33/06, B01D33/24, B01D33/36, B01D33/38 |

| Documentation Searched other than Minimum Documentation to the Extent that such Documents are Included in the Fields Searched | |
|---|---|
| Jitsuyo Shinan Koho | 1926 – 1988 |
| Kokai Jitsuyo Shinan Koho | 1971 – 1988 |

## III. DOCUMENTS CONSIDERED TO BE RELEVANT

| Category | Citation of Document, with indication, where appropriate, of the relevant passages | Relevant to Claim No. |
|---|---|---|
| A | JP, U, 61-167912 (Mitsubishi Heavy Industries, Ltd.) 18 October 1986 (18. 10. 86) (Family: none) | 1, 2, 4 |
| A | JP, A, 63-100909 (Fuji Filter Mfg. Co., Ltd.) 6 May 1988 (06. 05. 88) (Family: none) | 1, 3, 4 |

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed

- "T" later document published after the international filing date or priority date and not in conflict with the application but cited to understand the principle or theory underlying the invention
- "X" document of particular relevance: the claimed invention cannot be considered novel or cannot be considered to involve an inventive step
- "Y" document of particular relevance: the claimed invention cannot be considered to involve an inventive step when the document is combined with one or more other such documents, such combination being obvious to a person skilled in the art
- "&" document member of the same patent family

## IV. CERTIFICATION

| Date of the Actual Completion of the International Search | Date of Mailing of this International Search Report |
|---|---|
| May 30, 1989 (30. 05. 89) | June 12, 1989 (12. 06. 89) |
| International Searching Authority | Signature of Authorized Officer |
| Japanese Patent Office | |

Form PCT ISA 210 (second sheet) (January 1985)